# EUROPÄISCHE PATENTSCHRIFT

(11) **EP 1 574 122 B1**
(45) Veröffentlichungstag und Bekanntmachung des Hinweises auf die Patenterteilung: **13.02.2008**
(21) Anmeldenummer: 05003749.8
(22) Anmeldetag: 22.02.2005
(51) Int. Cl.: A01D 41/127, A01D 43/073

(54) **Vorrichtung zum Erfassen eines Ladewagens**
Apparatus for the detection of a loading wagon
Dispositif pour la détection d'une remorque de chargement

(30) Priorität: 09.03.2004 DE 102004011789
(43) Veröffentlichungstag der Anmeldung: 14.09.2005
(73) Patentinhaber: CLAAS Selbstfahrende Erntemaschinen GmbH, 33428 Harsewinkel (DE)
(72) Erfinder: Homburg, Helmut, 33428 Harsewinkel (DE)

(56) Entgegenhaltungen:
- DE-A1- 4 426 059
- DE-C1- 4 218 303
- US-A- 4 376 609
- US-A- 5 749 783

## Beschreibung

Die Erfindung bezieht sich auf eine Vorrichtung zur Ermittlung des Abstandes eines neben einer landwirtschaftlichen Arbeits- oder Erntemaschine herfahrenden Fahrzeugs nach dem Oberbegriff des Anspruchs 1. Insbesondere gelangt die Erfindung bei selbstfahrenden Erntemaschinen zur Anwendung, die das geerntete Erntegut während der Erntefahrt in ein Transportbehältnis, wie beispielsweise einen Ladewagen, überladen müssen.

Während einer Erntefahrt werden mehrere Tonnen an Erntegut geerntet. Die Erntegutmengen können dabei nur teilweise in einem dafür vorgesehenen Speicher aufgenommen werden, wobei bei einer vollständigen Befüllung dieses Speichers ein Entleervorgang eingeleitet werden muss, der häufig zur Unterbrechung der Erntefahrt führt. Dies ist bei selbstfahrenden Mähdreschern, die teilweise über einen Korntank mit einem Füllvolumen von teilweise über 10 Tonnen verfügen, bekannt.
Im Gegensatz zu einem selbstfahrenden Mähdrescher gibt es jedoch auch andere landwirtschaftliche Erntemaschinen, die aufgrund des sehr schnellen Erntevorgangs eine solch große Erntegutmenge bearbeiten, dass ein integrierter Speicher zur Aufnahme des bearbeiteten Ernteguts nicht ausreicht, um eine effiziente Erntefahrt zu gewährleisten. So erntet zum Beispiel ein selbstfahrender Feldhäcksler über 200 Tonnen Erntegut pro Stunde, so dass ein integrierter Erntegutspeicher bereits nach wenigen Minuten gefüllt wäre. Ein permanentes Abtanken des Speichers würde sich hierbei hinderlich auswirken. Deshalb wird bei der Ernte durch einen Feldhäcksler das Erntegut unmittelbar nach seiner Bearbeitung in ein nebenherfahrendes Transportfahrzeug übergeben.
Um bei der Ernte mit einem selbstfahrenden Mähdrescher nicht unnötig viel Zeit zu verlieren wird, soweit es die äußeren Bedingungen zulassen, ebenfalls beim Abtankvorgang mit einem Ladefahrzeug neben dem Mähdrescher her gefahren, wobei die Erntefahrt gleichzeitig fortgesetzt wird.
Problematisch ist in allen Fällen, das Erntegut verlustfrei in das Transportfahrzeug zu übergeben. Durch die Bewegung der fahrenden Landmaschine und des Transportfahrzeuges sowie die unterschiedliche Befüllung des Transportfahrzeuges wird der Überladevorgang erheblich erschwert, so dass teilweise große Mengen an Erntegut an dem Transportfahrzeug vorbei gefördert werden und als Verlust auf dem Feldboden zurückbleiben.

Die DD 109 975 offenbart eine Einrichtung zur Bestimmung der Position von Fahrzeugen zueinander, insbesondere zwischen Erntemaschinen und Transportfahrzeugen während der Übergabe der Erntegüter. Hierbei sind an dem Transportfahrzeug Hellmarken angebracht die das einfallende Sonnenlicht reflektieren. Die reflektierten Strahlen werden von zwei an der Erntemaschine angeordneten Abtasteinheiten empfangen wodurch der Abstand des Transportfahrzeuges ermittelt werden kann. Problematisch bei dieser Erfindung ist, dass die Reflexion bei trockenen wie auch bei feuchten Ernteverhältnissen stark eingeschränkt ist. So treten bei trockenen Erntebedingungen Staub- und Schmutzverwirbelungen auf die sowohl an der Erntemaschine wie auch an dem Transportfahrzeug anhaften, so dass die Hellmarken bis zur Unkenntlichkeit verschmutzen und die Sonnenstrahlen nicht reflektiert werden können. Bei feuchten Erntebedingungen und insbesondere bei Regen werden die reflektierten Strahlen durch die Tropfen abgelenkt und können nicht von der Abtasteinrichtung empfangen werden. Letztlich scheidet die Erntefahrt während der Dämmerung oder Nachtzeit aus.

Eine automatische Übergabevorrichtung wird in der GB 2073914 A beschrieben. Eine Sendeeinheit ist an einem selbstfahrenden Feldhäcksler angeordnet und mit dessen Auswurfkrümmer verbunden. Die Sendeeinheit übermittelt ein optisches Signal an einer an einem gezogenen Transportfahrzeug angebrachten Empfangseinheit, die das optische Signal an die Sendeeinheit reflektiert. In Abhängigkeit von den empfangenen Signalen wird der Auswurfkrümmer zur Erntegutübergabe an das Transportfahrzeug ausgerichtet. Auch hier ist wiederum problematisch, dass durch auftretende Staubverwirbelungen, insbesondere im hinteren Bereich des Feldhäckslers, die gesendeten und die zu empfangenen Signale abgelenkt werden und die unterschiedlichen Sende- und Empfangseinheiten nicht erreichen. Darüber hinaus verschmutzt die Empfangs- bzw. Reflektiereinheit durch die Anordnung unmittelbar unter dem Hinterreifen durch den von dem Hinterreifen des Feldhäckslers aufgeworfenen Schmutz sehr stark. Bei feuchten Arbeitsbedingungen werden diese Probleme noch verstärkt.

Es ist daher Aufgabe der zugrundeliegenden Erfindung eine Vorrichtung zur Ermittlung des Abstandes zwischen der landwirtschaftlichen Arbeits- oder Erntemaschine und einem Transportfahrzeug zu schaffen, welche die Probleme des Standes der Technik löst und eine einwandfreie Erfassung des Transportfahrzeuges und damit eine verlustarme Übergabe des Ernteguts auch unter schwierigen Einsatzverhältnissen gewährleistet.

Diese Aufgabe wird durch die kennzeichnenden Merkmale des Anspruchs 1 gelöst.

Indem eine Auswerteelektronik als ein Parameter zur Ermittlung des Abstandes zwischen der landwirtschaftlichen Arbeits- oder Erntemaschine und einem weiteren Fahrzeug die abfallende Flanke eines reflektierten Signals auswertet, werden ausschließlich die reflektierten Signal erfasst und ausgewertet. Hierdurch kann genau bestimmt werden, wo sich der Reflexionspunkt genau befindet.

Dadurch, dass die auszuwertende abfallende Flanke des reflektierten Signals die letzte abfallende Flanke des Sensorsignals ist, wobei die letzte abfallende Flanke dem an dem Fahrzeug reflektierten Signal entspricht und von der Auswerteelektronik erkannt wird, kann eine genaue Abstandsermittlung zu dem Fahrzeug durchgeführt werden, da die letzte abfallende Flanke stets vom entscheidenden Nutzreflex stammt.

Als weitere Parameter zur Abstandsermittlung dienen die konstante Geschwindigkeit des entsendeten Signals, die Laufzeit des entsendeten Signals sowie die Stärke des reflektierten Signals.
Durch die Auswertung dieser Parameter kann jederzeit der aktuelle Istabstand des Transportfahrzeuges zu der Erntemaschine ermittelt werden.

Entsprechend verhält es sich bei der Reflexionsstärke des Signals. Jeder Reflektor (Staubpartikel, Lieschenblatt, Fahrzeug) hat eine konstante Reflexionsstärke. Auf diesem Weg wird erkannt, ob das reflektierte Signal auch tatsächlich von dem Transportfahrzeug stammt oder nicht.

Durch die Einstellbarkeit der Solllaufzeit und Sollstärke des Signals kann der Fahrer der landwirtschaftlichen Arbeits- oder Erntemaschine eine Einstellung entsprechend den tatsächlichen Erntebedingungen vornehmen. Hiermit wird der Überladevorgang weiter optimiert.

Indem die Istlaufzeit mit dem Entsenden des Signals von der Sendeeinheit der Sensiervorrichtung beginnt und mit dem Auftreffen des von dem Fahrzeug reflektierten Signals im Empfänger endet, wird der genaue Abstand der Fahrzeuge zueinander festgestellt.

Durch die Auswertung der Verhältnisse der Istwerte zu den Sollwerten wird über eine Auswerteelektronik die Ansteuerung der Erntegutübergabevorrichtung vorgenommen. Damit wird ein verlustfreies Überladen des Ernteguts gewährleistet, ohne dass sich Störfaktoren, wie z.B. durch unterschiedliche Fahrgeschwindigkeiten sich ändernde Fahrzeugpositionen, negativ auf den Überladevorgang auswirken.

Weichen die Sollwerte, wie Laufzeit oder Signalstärke, erheblich von den Istwerten ab, setzt die Ansteuerung der Überladevorrichtung aus. Hiermit können Fehlsignale nicht zu einem fehlerhaften Überladen des Ernteguts vorbei an dem Transportfahrzeug führen.

Durch die Eingabe wenigstens eines Mindestabstandes der landwirtschaftlichen Arbeitsmaschine und dem Transportfahrzeug zueinander in die Auswerteelektronik, werden Signale, die innerhalb dieser Strecke reflektiert werden und in die Empfangseinheit fallen, ausgeblendet. Der gewählte Mindestabstand ist dabei so gewählt, dass das Signal innerhalb dieses Abstandes eine Strecke zurücklegt, welche für den Abstand der Fahrzeuge zueinander zu gering ist, so dass ein Nebeneinander der Fahrzeuge innerhalb dieser Strecke ausgeschlossen ist. Fehlsignale innerhalb dieser Strecke werden somit von vorneherein ausgeschlossen.

Durch die Aussendung eines flächenförmigen Signals können Schmutzpartikel, welche sich zwischen der landwirtschaftlichen Arbeits- oder Erntemaschine und dem Fahrzeug befinden den Empfang des Reflexionssignals nicht behindern. So wird aufgrund des breiten Signals immer nur ein Teil des Sendesignals oder des Reflexionssignals von Störkörpern abgelenkt, so dass der andere Teil des Sendesignals stets das Fahrzeug erreicht und von dort aus reflektiert wird und in die Empfangseinheit gelangt.

Die Sensiervorrichtung entsendet die Signale mit einer Frequenz mit welcher ein Überschneiden der Sendesignale mit den reflektierten Signalen ausgeschlossen ist. Hierdurch wird dies Abstandsermittlung weiter optimiert und Störsignale weiter reduziert.

Indem die Sendeeinheit von der Empfangseinheit der Sensiervorrichtung beabstandet ist, wird die Unempfindlichkeit und die Funktionalität der Sensiervorrichtung erhöht.

Das horizontale wie vertikale Entsenden und Empfangen der Signale durch die Sensiervorrichtung ermöglicht ein genaues Erfassen des Abstandes sowie des Profils des Fahrzeuges. Demgemäss wird ein genauer Überladevorgang, unabhängig von den Positionen der Erntemaschine und des Fahrzeuges zueinander, durchgeführt.

Dadurch, dass in Abhängigkeit von den empfangenen und ausgewerteten Signalen die Steuerung der Überladevorrichtung vorgenommen wird, wird eine verlustfreie Übergabe des bearbeiteten Ernteguts erzielt.

Weitere vorteilhafte Ausgestaltungen sind Gegenstand weiterer Unteransprüche und werden nachfolgend anhand von Zeichnungen näher erläutert.

Es zeigen:
- Figur 1:: die schematische Darstellung eines selbstfahrenden Feldhäckslers der neben einem Transportfahrzeug fährt mit erfindungsgemäßer Vorrichtung in Rückansicht
- Figur 2:: das Diagramm des Sende- und Empfangssignals der erfindungsgemäßen Vorrichtung

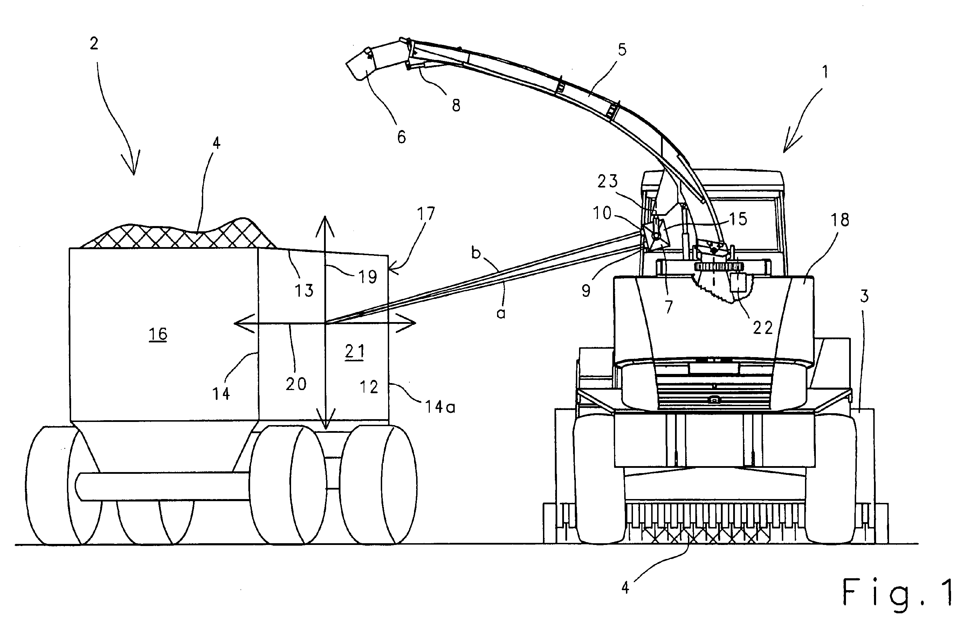

Die Figur 1 zeigt in Rückansicht einen selbstfahrenden Feldhäcksler 1 der neben einen Transportfahrzeug 2 fährt. Der Feldhäcksler 1 zieht mit dem frontseitig angeordneten Vorsatzgerät 3 das zu einem Schwad abgelegte Erntegut 4 ein und bearbeitet es. Das bearbeitete Erntegut 4 wird danach über einen um die vertikale Achse drehbaren und in der Höhe verstellbaren Auswurfkrümmer 5 an das Transportfahrzeug 2 übergeben. Am Auswurfende des Auswurfkrümmers 5 ist eine Auswurfkrümmerklappe 6 angeordnet, die über eine Auswurfkrümmerklappensteuerung 8 verstellbar ist. Durch die Verstellung der Auswurfkrümmerklappe 6 wird der Erntegutaustrittsstrahl gelenkt, wobei eine hochgeschwenkte Auswurfkrümmerklappe 6 das austretende Erntegut 4 weiter wirft und eine abgesenkte Auswurfkrümmerklappe 6 das Erntegut 4 nach unten lenkt und so die Wurfweite verkürzt.

Zur Erkennung des Abstandes des Transportfahrzeuges 2 zu dem Feldhäcksler 1 ist an dem Feldhäcksler 1 die erfindungsgemäße Sensiervorrichtung 7 angeordnet. Diese kann an einem beliebigen Ort am Feldhäcksler 1 angeordnet sein, beispielsweise wie abgebildet im unteren Bereich des Auswurfkrümmers 5 des Feldhäckslers 1 oder auf der Karosserie 18 des Feldhäckslers 1. Die Sensiervorrichtung 7 steht außerdem mit der Stellvorrichtung 22 des Auswurfkrümmers 5 und der Auswurfkrümmerklappensteuerung 8 in an sich bekannter Weise in Verbindung.
Die Sensiervorrichtung 7 ist aus einer Sendeeinheit 9 und einer Empfangseinheit 10 zusammengesetzt. Die Sendeeinheit 9 sendet Signale aus, die von dem Transportfahrzeug 2, reflektiert werden. Die Empfangseinheit 10 empfängt die reflektierten Signale. Aufgrund der rauen Oberfläche der Seitenwand 21 des Transportfahrzeuges 2 wird gewährleistet, dass stets Signale in Richtung Empfangseinheit 10 reflektiert werden, also unabhängig von dem Einfallswinkel des Sendesignals a. Um eine störungsfreie Entsendung des Signals und einen störungsfreien Empfang zu ermöglichen, hat es sich als vorteilhaft erwiesen die Sendeeinheit 9 und die Empfangseinheit 10 beabstandet voneinander anzuordnen. Hierbei hat sich ein Abstand von ca. 120 mm als besonders geeignet herausgestellt.
Zur exakten Erkennung des Transportfahrzeuges 2 schwenkt die Sensiervorrichtung 7 in vertikaler und in horizontaler Richtung um eine Achse 23. Hierdurch werden die Signale dauerhaft horizontal und vertikal oszillierend entsendet. Daher ist die Sensiervorrichtung 7 beweglich an einer an dem Auswurfkrümmer 5 befestigten Schwenkachse 23 angeordnet.
Bei der durch die Pfeile 19 gekennzeichneten vertikalen Verschwenkung wird die Unterkante 12 und die Oberkante 13 des Transportfahrzeuges 2 von den Sensorsignalen erfasst und als ein Parameter zur Einstellung der Auswurfkrümmerklappe 6 herangezogen. Durch die vertikale Oszillation wird der Abstand des Transportfahrzeuges 2 zu dem Feldhäcksler 1 ermittelt. Die Erkennung des Abstandes des Feldhäckslers 1 zu dem Transportfahrzeug 2 ist notwendig, um über die Auswurfkrümmerklappe 6 die Wurfweite so zu steuern, dass das bearbeitete Erntegut 4 die Ladefläche des Transportfahrzeuges 2 trifft und nicht an dem Transportfahrzeug 2 vorbei gefördert wird.
Es ist aber auch denkbar, die Sensiervorrichtung 7 so einzustellen, dass nicht nur die Seitenwand 21 des Transportfahrzeuges 2, sondern auch das bei gefülltem Transportfahrzeug 2 über die Seitenwand 21 hinausragende Erntegut erfasst wird, um weiterhin eine optimale Befüllung des Transportfahrzeuges 2 zu erreichen.

Die horizontale Oszillation dient der Erfassung des Profils des Transportfahrzeuges 2. Die Erkennung des Profils des Transportfahrzeuges 2 ist erforderlich, um die Stellvorrichtung 22 des Auswurfkrümmers 5 so anzusteuern, dass durch die Verschwenkung des Auswurfkrümmers 5 das Transportfahrzeug 2 von vorne bis hinten komplett gefüllt wird. Allein die vertikale Verschwenkung erfasst zwar die Unterkante 12 und Oberkante 13 des Transportfahrzeuges 2, allerdings kann es durch die unterschiedlichen Fahrgeschwindigkeiten des Transportfahrzeuges 2 und des Feldhäckslers 1 und die damit in Verbindung stehenden permanenten Positionsveränderungen der Fahrzeuge dazu kommen, dass das Transportfahrzeug 2 nicht auf einer Höhe mit dem Feldhäcksler 1 ist und der vertikal oszillierende Strahl das Transportfahrzeug 2 nicht mehr erfasst. In diesen Fällen würde aufgrund der unveränderten Stellung des Auswurfkrümmers 5 und der Auswurfkrümmerklappe 6 das Erntegut 4 an dem Transportfahrzeug 2 vorbei gefördert werden und als Verlust auf dem Feldboden zurückbleiben. Durch die Kombination des vertikal oszillierenden Strahls mit dem horizontal oszillierenden Strahl wird dieses Problem gelöst. Durch das horizontale Verschwenken werden die seitlichen Außenkanten 14, 14a der Seitenwand 21 des Transportfahrzeuges 2 und damit die Länge und die exakte Position des Transportfahrzeuges 2, unabhängig von den unterschiedlichen Fahrgeschwindigkeiten und den sich dadurch ändernden Positionen des Transportfahrzeuges 2 und des Feldhäckslers 1 zueinander, erfasst.
Ein weiteres Problem bei der Erntefahrt liegt in dem genauen Empfang der Reflexionssignale. So wirken Staubaufwirbelungen und Niederschlag negativ auf den Verlauf der Sensorsignale ein. Bei herkömmlichen Sensiervorrichtungen werden punktförmige Lasersender eingesetzt, die einen Signaldurchmesser von kleiner oder gleich 1 mm haben. Dies führt in den meisten Fällen dazu, dass bereits kleinere Staubteilchen oder Regentropfen sowohl das entsendete als auch das reflektierte Signal reflektieren, so dass das Signal abgelenkt wird und eine Messung des Seitenabstandes des Feldhäckslers 1 zu dem Transportfahrzeug 2 unmöglich ist bzw. verfälscht wird, da die frühzeitige Reflexion einen kürzeren Abstand suggeriert.
Es hat sich deshalb als vorteilhaft herausgestellt einen Signaldurchmesser zu verwenden, der nicht ein punktuelles, sondern ein flächenförmiges Signal entsendet. Dieses flächenförmige Signal kann beispielsweise einen Durchmesser von 40 mm haben. Durch das breite Signal wirken sich Staubpartikel oder andere Störfaktoren nicht mehr auf die Ermittlung des Abstandes zwischen dem Feldhäcksler 1 und dem Transportfahrzeug 2 aus. So wird lediglich ein Teil des breiten Sensorsignals durch Schmutzpartikel abgelenkt, so dass ein Großteil des Sensorsignals auf die Seitenwand 21 des Transportfahrzeugs 2 auftrifft und reflektiert wird. Da der Anteil der reflektierten Signale aufgrund der breiteren Streuung durch das vergrößerte Lasersignal ebenfalls größer ist, fällt stets ein reflektiertes Signal in die Empfangseinheit 10 ein, so dass es unerheblich ist, ob weitere reflektierte Teilsignale abgelenkt werden oder nicht.

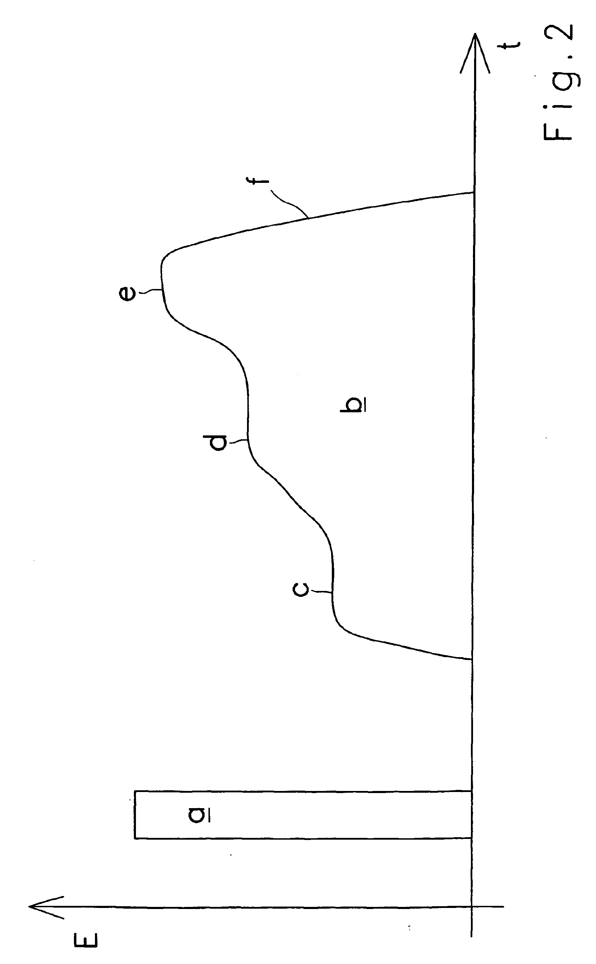

Um den Verlauf eines Signals und die Ermittlung des Abstandes näher zu erläutern, ist in der Figur 2 ein Diagramm des Verlaufs eines entsendeten und reflektierten Signals dargestellt.
Auf der x - Achse ist die Laufzeit t und auf der y - Achse die Strahlungsstärke E des Signals sinngemäß dargestellt. Das Sendesignal a selbst wird mit einer konstanten Geschwindigkeit v und einer konstanten Strahlungsstärke E (mW) gesendet. Insgesamt wird der Verlauf des Signals vom Zeitpunkt des Entsendens, der Reflexion und des Empfangs dargestellt. Hierbei stellt das Signal a das Sendesignal und das Signal b das reflektierte Signal dar.

Unter Zugrundelegung unterschiedlicher reflektierter Signale wird über eine in der Auswerteelektronik 15 installierte Software festgestellt, bei welchem reflektierten Signal es sich um das von der Seitenwand 21 des Transportfahrzeuges 2 reflektierte Signal handelt. Die Auswertung ist insbesondere deshalb wichtig, da das Signal von unterschiedlichen zwischen dem Feldhäcksler 1 und dem Transportfahrzeug 2 umherfliegenden Teilchen, wie Staubpartikel oder Lieschenblätter, reflektiert werden kann und auf diese Weise in die Empfangseinheit 10 einfällt, ohne die Seitenwand 21 des Transportfahrzeuges 2 erreicht zu haben. Hierdurch entstünden Fehlsignale, die eine fehlerhafte Abstandsermittlung zur Folge hätten.
Die Zuordnung des reflektierten Signals zu dem dazugehörigen Reflektor kann aufgrund der konstanten Signalstärke E des entsendeten Signals und anhand der annähernd konstanten Stärken E des Reflexionssignals der unterschiedlichen Reflektoren, festgestellt werden. So haben die Stärke des von einem Staubpartikel c, die Stärke des von einem Lieschenblatt d und die Stärke des von der Seitenwand 21 des Transportfahrzeuges 2 reflektierten Signals e dabei eine, auf den jeweiligen Reflektor bezogen, annähernd konstante Größe, deren Wert in die Software eingegeben ist. Beim Empfang eines Reflexionssignals wertet die Software dieses Reflexionssignal aus und ordnet es einem Reflektor (Staubpartikel, Lieschenblatt oder Transportfahrzeug) zu. Auf diese Weise kann anhand der Reflexionsstärke E das an dem Transportfahrzeug 2 reflektierte Signal ermittelt werden.

In einem weiteren Schritt wird zur Berechnung des Abstandes die Laufzeit t und die Geschwindigkeit v des entsendeten Signals a und des ermittelten Reflexionssignals durch die Software berechnet. Um den Überladevorgang des Ernteguts auf das Transportfahrzeug 2 zu ermöglichen muss das Transportfahrzeug 2 in einem bestimmten Abstand neben dem Feldhäcksler 1 herfahren, so dass der Auswurfkrümmer 5 und die Auswurfkrümmerklappe 6 eine Stellung einnehmen, in der das Erntegut 4 verlustfrei übergeben wird.
Der Abstand zu dem Transportfahrzeug 2, ergibt sich aus der Laufzeit t die das entsendete Signal a für die Zurücklegung des Hin- und Rückweges von der Sendeeinheit 9 bis zum Transportfahrzeug 2 und letztlich dem Auftreffen in die Empfangseinheit 10 benötigt sowie aus der vorliegend konstanten Geschwindigkeit des Signals. Das Reflektorsignal am Transportfahrzeug 2 bildet dabei den relevanten Nutzreflex.

Aus diesen drei Parametern kann die Software in an sich bekannter Weise den Abstand zu dem Transportfahrzeug 2 ermitteln.

Um nun den relevanten Nutzreflex - das Reflexionssignal an dem Transportfahrzeug 2 - genau festlegen zu können, wird erfindungsgemäß die abfallende Flanke f des reflektierten Signals e herangezogen.

Wie sich aus der Figur 2 ergibt, setzt sich das Signal aus einer aufsteigenden Flanke a, aus unterschiedlichen Reflexionspunkten c, d, e und unterschiedlichen abfallenden Flanken zusammen. Als Parameter zur Ermittlung des Abstandes dient ausschließlich die abfallende Flanke f. Die abfallende Flanke f ist entscheidend, da sie stets die letzte abfallende Flanke des Signals b ist und daher von dem entscheidenden Nutzreflex - der Reflexion an dem Transportfahrzeug - stammt. Da keine weiteren Reflektoren der Seitenwand 21 nachgeordnet sind und demnach keine weiteren abfallenden Flanken folgen können, sowie aufgrund der bekannten und ermittelten Reflexionsstärke E des Reflexionssignals e der Seitenwand, kann durch die Ermittlung der abfallenden Flanke f der exakte Abstand zu dem Transportfahrzeug 2 festgestellt werden.
Zudem wird die Frequenz mit der die Sensiervorrichtung 7 die Signale entsendet so gewählt, dass sich die entsendeten Signale nie mit den empfangenen und/oder reflektierten Signalen überschneiden, d.h es wird erst dann ein neues Signal entsendet, wenn das letzte reflektierte Signal empfangen worden ist.

Um ein deutliches Signal zu empfangen und damit eine genaue Abstandsermittlung durchzuführen wird deshalb die Triggerung des Reflexionssignals e auf der abfallenden Flanke f durchgeführt, da die abfallende Flanke f stets vom Nutzreflex stammt. Die abfallende Flanke wird stets daran erkannt, dass der Vorgänger kleiner ist als der Nachfolger. Bei der aufsteigenden Flanke verhält es sich genau umgekehrt. In der Praxis hat es sich als besonders vorteilhaft erwiesen die Triggerung bei 2/3 des Maximalwertes der abfallenden Flanke vorzunehmen.
Aus der Gesamtheit der reflektierten Eingangssignale kann damit eine genaue Bestimmung der letzten abfallenden Flanke f und damit die genaue Bestimmung des Abstandes des Transportfahrzeuges 2 zu dem Feldhäcksler 1 festgestellt werden.

Insgesamt dient die Ermittlung des Abstandes der Verbesserung der Erntegutübergabe an das Transportfahrzeug 2. Sobald eine Abstandsveränderung erkannt wird, muss korrigierend in die Übergabe eingegriffen werden. Dass heißt verringert sich der Abstand, muss beispielsweise die Auswurfkrümmerklappe 6 gesenkt werden, damit das Erntegut 4 nicht über das Transportfahrzeug hinweg gefördert wird. Vergrößert sich der Abstand des Feldhäckslers 1 zu dem Transportfahrzeug 2 muss die Auswurfkrümmerklappe 6 hochgeschwenkt werden, damit das Erntegut 4 nicht an der Seitenwand 21 des Transportfahrzeuges 2 abprallt.

Die obigen Grundsätze sind im Hinblick auf die Ermittlung des Profils des Transportfahrzeuges 2 entsprechend anzuwenden. Hier wird der Abstand zu den Außenkanten 14, 14a der Seitenwand 21 des Transportfahrzeuges 2 mit Hilfe der Parameter Signalstärke E, Laufzeit t, Geschwindigkeit v und abfallende Flanke ermittelt.
Hiermit wird das Transportfahrzeug 2 unabhängig von seiner relativen Fahrgeschwindigkeit zu dem Feldhäcksler 1 erkannt und gleichmäßig über die gesamte Fläche von der Vorderseite 16 bis zu der Hinterseite 17 und ohne Überladeverluste befüllt.

Es liegt im Rahmen der Erfindung alternativ zu der oben beschriebenen Laufzeitmessung einen Mindestabstand in die Auswerteelektronik 15 einzugeben, wobei dieser Mindestabstand so gering, dass ein Transportfahrzeug 2 nicht in diesen Bereich einfahren kann. Sinn dieses Mindestabstandes ist es reflektierte Signale innerhalb diese Bereiches auszublenden, so dass Reflexionen innerhalb dieses Bereiches zu keinen Fehlsignalen führen können, weil sie unbeachtlich sind. Hierdurch wird die Ortungsgenauigkeit erhöht.

Es liegt im Rahmen des Könnens eines Fachmanns die hier am Beispiel eines Feldhäckslers beschriebene Erfindung auf beliebige landwirtschaftliche Arbeits- oder Erntemaschinen zu übertragen. So findet die Erfindung beispielsweise entsprechende Anwendung bei der Erntearbeit eines selbstfahrenden Mähdreschers, der den vollen Korntank entleeren und dabei das Erntegut an ein parallel fahrendes Transportfahrzeug übergeben muss.

### Bezugszeichenliste:

- 1: Selbstfahrender Feldhäcksler
- 2: Transportfahrzeug
- 3: Vorsatzgerät
- 4: Erntegut
- 5: Auswurfkrümmer
- 6: Auswurfkrümmerklappe
- 7: Sensiervorrichtung
- 8: Auswurfkrümmerklappensteuerung
- 9: Sendeeinheit
- 10: Empfangseinheit
- 12: Unterkante
- 13: Oberkante
- 14: Seitliche Außenkanten
- 15: Auswerteelektronik
- 16: Vorderseite
- 17: Hinterseite
- 18: Karosserie
- 19: Vertikale Oszillation
- 20: Horizontale Oszilation
- 21: Seitenwand
- 22: Stellvorrichtung
- 23: Schwenkachse

- A: Sendesignal
- B: Reflektierte Signal
- C: Staubreflektorsignal
- D: Lieschenblattreflektorsignal
- E: Seitenwandreflektorsignal
- F: Abfallende Flanke

## Patentansprüche

1. Sensiervorrichtung bestehend aus einer Sendeeinheit, einer Empfangseinheit und einer Auswerteelektronik zur Ermittlung der Laufzeit eines Signals an einer landwirtschaftlichen Arbeits- oder Erntemaschine zur Erfassung des Abstandes eines neben der landwirtschaftlichen Arbeits- oder Erntemaschine fahrenden oder stehenden Fahrzeuges, wobei das Ausgangssignal in ein Reflexionssignal mit wenigstens einer ansteigenden Flanke und mit mindestens einer abfallenden Flanke transformiert wird,
**dadurch gekennzeichnet, dass**
die Auswerteelektronik (15) als ein Parameter zur Ermittlung des Abstandes zwischen der landwirtschaftlichen Arbeits- oder Erntemaschine (1) und dem Fahrzeug (2) die abfallende Flanke (f) des reflektierten Signals (e) auswertet.

2. Sensiervorrichtung nach Anspruch 1,
**dadurch gekennzeichnet, dass**
die abfallende Flanke die letzte abfallende Flanke (f) des reflektierten Signals (e) ist.

3. Sensiervorrichtung nach einem oder mehreren der vorangegangenen Ansprüche,
**dadurch gekennzeichnet, dass**
weitere Parameter zur Messung des Abstandes zwischen der landwirtschaftlichen Arbeits- oder Erntemaschine (1) und dem Fahrzeug (2), die Geschwindigkeit (v) des Signals, die Laufzeit (t) des entsendeten Signals (a) und/oder die Stärke des reflektierten Signals (b) sind.

4. Sensiervorrichtung nach einem oder mehreren der vorangegangenen Ansprüche,
**dadurch gekennzeichnet, dass**
die Solllaufzeit und die Sollstärke des Signals zur Erkennung des Abstandes zwischen der landwirtschaftlichen Arbeits- oder Erntemaschine (1) und dem Fahrzeug (2) einstellbar ist.

5. Sensiervorrichtung nach einem oder mehreren der vorangegangenen Ansprüche,
**dadurch gekennzeichnet, dass**
die Istlaufzeit mit der Entsendung des Signals von der Sendeeinheit (9) beginnt und mit dem Auftreffen des Signals in der Empfangseinheit (10) nach der Reflexion an der Bordwand (21) endet.

6. Sensiervorrichtung nach einem oder mehreren der vorangegangenen Ansprüche,
**dadurch gekennzeichnet, dass**
die ermittelten Werte der Istlaufzeit und/oder der Solllaufzeit und/oder der Signalstärke und/oder der abfallenden Flanke (f) einer Auswertelektronik (15) übergeben werden.

7. Sensiervorrichtung nach einem oder mehreren der vorangegangenen Ansprüche,
**dadurch gekennzeichnet, dass**
in Abhängigkeit von dem Verhältnis der lstlaufzeit zur Solllaufzeit, der Signalstärke und der abfallenden Flanke (f) über der Auswerteelektronik (15) die Steuerung der Erntegutübergabevorrichtung (5, 6) vorgenommen wird.

8. Sensiervorrichtung nach einem oder mehreren der vorangegangenen Ansprüche,
**dadurch gekennzeichnet, dass**
bei Überschreiten oder Unterschreiten der Solllaufzeit und/ oder der Sollstärke des Signals die Ansteuerung der Überladevorrichtung (5, 6) aussetzt.

9. Sensiervorrichtung nach einem oder mehreren der vorangegangenen Ansprüche,
**dadurch gekennzeichnet, dass**
in der Auswerteelektronik (15) wenigstens ein Mindestabstandswert hinterlegbar ist, welcher in den Reflexionsspektren nicht berücksichtigt wird.

10. Sensiervorrichtung nach einem oder mehreren der vorangegangenen Ansprüche,
**dadurch gekennzeichnet, dass**
die Sensiervorrichtung (7) an der landwirtschaftlichen Arbeits- oder Erntemaschine (1) und/oder an dem Fahrzeug (2) angeordnet ist.

11. Sensiervorrichtung nach einem oder mehreren der vorangegangenen Ansprüche,
**dadurch gekennzeichnet, dass**
das die Sensiervorrichtung (7) ein punkt- oder flächenförmiges Signal entsendet.

12. Sensiervorrichtung nach einem oder mehreren der vorangegangenen Ansprüche,
**dadurch gekennzeichnet, dass**
der von dem Signal (a) erfasste Bereich einen Durchmesser von wenigstens 40 mm hat.

13. Sensiervorrichtung nach einem oder mehreren der vorangegangenen Ansprüche,
**dadurch gekennzeichnet, dass**
die Signale die die Sensiervorrichtung (7) entsendet mit einer Frequenz entsendet werden, die ein Überschneiden des Sendesignals (a) mit den reflektierten Signalen (b, c, d, e) ausschließt.

14. Sensiervorrichtung nach einem oder mehreren der vorangegangenen Ansprüche,
**dadurch gekennzeichnet, dass**
die Sendeeinheit (9) von der Empfangseinheit (10) beabstandet ist.

15. Sensiervorrichtung nach einem oder mehreren der vorangegangenen Ansprüche,
**dadurch gekennzeichnet, dass**
die Sendeeinheit (9) mindestens 120mm von der Empfangseinheit (10) beabstandet ist.

16. Sensiervorrichtung nach einem oder mehreren der vorangegangenen Ansprüche,
**dadurch gekennzeichnet, dass**
die Sensiervorrichtung (7) Signale horizontal und vertikal oszillierend entsendet und empfängt.

17. Sensiervorrichtung nach einem oder mehreren der vorangegangenen Ansprüche,
**dadurch gekennzeichnet, dass**
in Abhängigkeit von den empfangenen Signalen (f) die Steuerung der Überladevorrichtung (5, 6) vorgenommen wird.

## Claims

1. A sensing apparatus comprising a transmitting unit, a receiving unit and an electronic evaluation means for ascertaining the transit time of a signal on an agricultural working machine or harvester for detecting the spacing of a vehicle which is standing or travelling beside the agricultural working machine or harvester, wherein the output signal is transformed into a reflection signal with at least one rising edge and with at least one falling edge,
**characterised in that**
the electronic evaluation means (15) evaluates the falling edge (f) of the reflected signal (e) as a parameter for ascertaining the spacing between the agricultural working machine or harvester (1) and the vehicle (2).

2. A sensing apparatus according to claim 1 **characterised in that** the falling edge is the last falling edge (f) of the reflected signal (e).

3. A sensing apparatus according to one or more of the preceding claims **characterised in that** further parameters for measuring the spacing between the agricultural working machine or harvester (1) and the vehicle (2) are the speed (v) of the signal, the transit time (t) of the emitted signal (a) and/or the strength of the reflected signal (b).

4. A sensing apparatus according to one or more of the preceding claims **characterised in that** the reference transit time and the reference strength of the signal for detecting the spacing between the agricultural working machine or harvester (1) and the vehicle (2) is adjustable.

5. A sensing apparatus according to one or more of the preceding claims **characterised in that** the actual transit time begins with the emission of the signal by the transmitting unit (9) and ends with the arrival of the signal in the receiving unit (10) after reflection at the side wall (21).

6. A sensing apparatus according to one or more of the preceding claims **characterised in that** the ascertained values of the actual transit time and/or the reference transit time and/or the signal strength and/or the falling edge (f) are passed to an electronic evaluation means (15).

7. A sensing apparatus according to one or more of the preceding claims **characterised in that** control of the crop material transfer device (5, 6) is effected in dependence on the ratio of the actual transit time to the reference transit time, the signal strength and the falling edge (f) by way of the electronic evaluation means (15).

8. A sensing apparatus according to one or more of the preceding claims **characterised in that** actuation of the transloading device (5, 6) stops when the transit time and/or the strength of the signal rises above or falls below the reference transit time and/or the reference strength of the signal.

9. A sensing apparatus according to one or more of the preceding claims **characterised in that** at least one minimum spacing value which is not considered in the reflection spectra is stored in the electronic evaluation means (15).

10. A sensing apparatus according to one or more of the preceding claims **characterised in that** the sensing apparatus (7) is arranged on the agricultural working machine or harvester (1) and/or on the vehicle (2).

11. A sensing apparatus according to one or more of the preceding claims **characterised in that** the sensing apparatus (7) emits a signal in point or surface form.

12. A sensing apparatus according to one or more of the preceding claims **characterised in that** the region detected by the signal (a) is of a diameter of at least 40 mm.

13. A sensing apparatus according to one or more of the preceding claims **characterised in that** the signals which the sensing apparatus (7) emits are emitted at a frequency which excludes overlap of the transmitting signal (a) with the reflected signals (b, c, d, e).

14. A sensing apparatus according to one or more of the preceding claims **characterised in that** the transmitting unit (9) is spaced from the receiving unit (10).

15. A sensing apparatus according to one or more of the preceding claims **characterised in that** the transmitting unit (9) is spaced at at least 120 mm from the receiving unit (10).

16. A sensing apparatus according to one or more of the preceding claims **characterised in that** the sensing apparatus (7) emits and receives signal horizontally and vertically oscillatingly.

17. A sensing apparatus according to one or more of the preceding claims **characterised in that** control of the transloading device (5, 6) is effected in dependence on the received signals (f).

## Revendications

1. Dispositif de détection composé d'une unité d'émission, d' une unité de réception et d'une électronique d'évaluation pour déterminer le temps de parcours d'un signal sur une machine agricole de travail ou de récolte en vue de saisir la distance d'un véhicule roulant ou arrêté à côté de la machine agricole de travail ou de récolte, le signal de sortie étant transformé en un signal de réflexion comportant au moins un flanc ascendant et au moins un flanc descendant, **caractérisé en ce que** l'électronique d'évaluation (15) évalue le flanc descendant (f) du signal réfléchi (e) en tant que paramètre pour déterminer la distance entre la machine agricole de travail ou de récolte (1) et le véhicule (2).

2. Dispositif de détection selon la revendication 1, **caractérisé en ce que** le flanc descendant est le dernier flanc descendant (f) du signal réfléchi (e).

3. Dispositif de détection selon l'une ou plusieurs des revendications précédentes, **caractérisé en ce que** des paramètres supplémentaires utilisés pour mesurer la distance entre la machine agricole de travail ou de récolte (1) et le véhicule (2) sont la vitesse (v) du signal, le temps de parcours (t) du signal envoyé (a) et/ou l'intensité du signal réfléchi (b).

4. Dispositif de détection selon l'une ou plusieurs des revendications précédentes, **caractérisé en ce que** le temps de parcours théorique et l'intensité théorique du signal de détection de la distance entre la machine agricole de travail ou de récolte (1) et le véhicule (2) sont réglables.

5. Dispositif de détection selon l'une ou plusieurs des revendications précédentes, **caractérisé en ce que** le temps de parcours réel commence avec l'envoi du signal par l'unité d'émission (9) et se termine avec l'arrivée du signal dans l'unité de réception (10) après réflexion sur la ridelle (21).

6. Dispositif de détection selon l'une ou plusieurs des revendications précédentes, **caractérisé en ce que** les valeurs déterminées du temps de parcours réel et/ou du temps de parcours théorique et/ou de l'intensité de signal et/ou du flanc descendant (f) sont transmises à une électronique d'évaluation (15).

7. Dispositif de détection selon l'une ou plusieurs des revendications précédentes, **caractérisé en ce que** le dispositif de transfert de produit récolté (5, 6) est commandé par l'intermédiaire de l'électronique d'évaluation (15) en fonction du rapport du temps de parcours réel au temps de parcours théorique, de l'intensité de signal et du flanc descendant (f) .

8. Dispositif de détection selon l'une ou plusieurs des revendications précédentes, **caractérisé en ce que** la commande du dispositif de déchargement (5, 6) est interrompue en cas de surpassement ou de soupassement du temps de parcours théorique et/ou de l'intensité théorique du signal.

9. Dispositif de détection selon l'une ou plusieurs des revendications précédentes, **caractérisé en ce qu'** au moins une valeur de distance minimale, dont il n'est pas tenu compte dans les spectres de réflexion, peut être enregistrée dans l'électronique d'évaluation (15).

10. Dispositif de détection selon l'une ou plusieurs des revendications précédentes, **caractérisé en ce que** le dispositif de détection (7) est disposé sur la machine agricole de travail ou de récolte (1) et/ou sur le véhicule (2).

11. Dispositif de détection selon l'une ou plusieurs des revendications précédentes, **caractérisé en ce que** le dispositif de détection (7) envoie un signal ponctuel ou planiforme.

12. Dispositif de détection selon l'une ou plusieurs des revendications précédentes, **caractérisé en ce que** la zone couverte par le signal (a) a un diamètre d'au moins 40 mm.

13. Dispositif de détection selon l'une ou plusieurs des revendications précédentes, **caractérisé en ce que** les signaux que le dispositif de détection (7) envoie sont émis à une fréquence qui exclut un chevauchement du signal d'émission (a) avec les signaux réfléchis (b, c, d, e).

14. Dispositif de détection selon l'une ou plusieurs des revendications précédentes, **caractérisé en ce que** l'unité d' émission (9) est distante de l'unité de réception (10).

15. Dispositif de détection selon l'une ou plusieurs des revendications précédentes, **caractérisé en ce que** l'unité d' émission (9) est distante d' au moins 120 mm de l'unité de réception (10).

16. Dispositif de détection selon l'une ou plusieurs des revendications précédentes, **caractérisé en ce que** le dispositif de détection (7) envoie et reçoit des signaux en oscillant horizontalement et verticalement.

17. Dispositif de détection selon l'une ou plusieurs des revendications précédentes, **caractérisé en ce que** le dispositif de déchargement (5, 6) est commandé en fonction des signaux (f) reçus.
